# EUROPÄISCHE PATENTANMELDUNG

(11) **EP 1 958 683 A2**
(43) Veröffentlichungstag der Anmeldung: **20.08.2008**
(21) Anmeldenummer: 07113903.4
(22) Anmeldetag: 07.08.2007
(51) Int. Cl.: B01D 53/62, C01D 7/00, C01D 7/10

(54) **Verfahren zum Behandeln von Rauchgas bei Kraftwerken und anderen Anlagen**

(30) Priorität: 11.01.2007 EP 07100387; 15.03.2007 EP 07104246
(71) Anmelder: Silicon Fire AG, 6045 Meggen (CH)
(72) Erfinder: Krass, Florian, Dr., 6353 Weggis (CH)
(74) Vertreter: OK pat AG

(57) **Zusammenfassung**

Verfahren zum Binden von gasförmigem CO₂, wobei eine konzentrierte Salzsole zum Einsatz kommt. Dabei wird Ammoniak (NH₃) und das zu bindende CO₂ in die konzentrierte Salzsole eingeleitet. Es entsteht dabei Natriumhydrogencarbonat und/oder Natriumcarbonat, das aus der ammoniakhaltigen Sole entnommen werden kann. In weiteren vor- oder nachgeschalteten Teilprozessen können weitere Bestandteile des Rauchgases eliminiert oder deutlich reduziert werden.

## Beschreibung

Die vorliegende Anmeldung beansprucht die Prioritäten der
- Patentanmeldung EP 07 100 387.5, die am 11. Januar 2007 beim EPA eingereicht wurde und der
- Patentanmeldung 07 104 246.9, die am 15. März 2007 beim EPA eingereicht wurde.

Die vorliegende Anmeldung betrifft die Rauchgasreinigung bei Kraftwerken und anderen Anlagen. Insbesondere geht es in einem Teilprozess um das Binden von gasförmigem CO₂, wobei eine Salzsole eingesetzt wird.

Kohlenstoffdioxid (meist Kohlendioxid genannt) ist eine chemische Verbindung aus Kohlenstoff und Sauerstoff. Kohlendioxid ist ein farb- und geruchloses Gas. Es ist mit einer geringen Konzentration ein natürlicher Bestandteil der Luft und entsteht in Lebewesen bei der Zellatmung, aber auch bei der Verbrennung von kohlenstoffhaltigen Substanzen unter ausreichendem Sauerstoff. Seit Beginn der Industrialisierung steigt der CO₂-Anteil in der Atmosphäre deutlich an. Hauptursache hierfür sind die vom Menschen verursachten - die sogenannten anthropogenen - CO₂-Emissionen.

Das Kohlendioxid in der Atmosphäre absorbiert einen Teil der Wärmestrahlung. Diese Eigenschaft macht Kohlendioxid zu einem so genannten Treibhausgas und ist einer der Mitverursacher des Treibhauseffekts.

Aus diesen und auch aus anderen Gründen wird zur Zeit in verschiedenste Richtungen geforscht und entwickelt, um einen Weg zu finden, um die anthropogenen CO₂-Emissionen zu reduzieren. Besonders im Zusammenhang mit der Energieerzeugung, die häufig durch das Verbrennen fossiler Energieträger, wie Kohle oder Gas, erfolgt, aber auch bei anderen Verbrennungsprozessen, zum Beispiel bei der Müllverbrennung, besteht ein grosser Bedarf zur CO₂ Reduktion. Es werden pro Jahr Milliarden von Millionen Tonnen CO₂ durch solche Prozesse in die Atmosphäre abgegeben.

Es gibt bereits erste Ansätze, die im Rahmen von Forschungsprojekten verfolgt werden, um CO₂ aus einem Abgasstrom abzutrennen. Im Folgenden sind entsprechende Projekte und Publikationen als Beispiele genannt:

### Carbon Sequestration from Flue gas (USA):

Ziel dieses Projektes ist die Entwicklung eines einfachen und kostengünstigen Verfahrens zur Abtrennung von CO₂ als nahezu reinen Strom aus dem Abgas eines Kraftwerkes mit Hilfe eines Natrium-basierten Sorptionsmittels.

### Development of Superior Sorbents (USA):

Im Rahmen dieses Projektes sollen verbesserte Absorptionsmittel zur Abscheidung von CO₂ aus Rauchgasen entwickelt werden. Eingesetzt werden sollen Sorptionsmittel mit Cs (Cäsium) und CaO (Calciumoxid).

### Mineral CO₂ sequestration:

Gemäss einem entsprechenden Report (siehe United States National Energy Technology Laboratory 2001 (NETL 2001) Proceedings of Workshop NETL Mineral CO2 Sequestration), kann das CO₂ eines Kraftwerks in einer Mineralkarbonisierungsanlage umgesetzt werden in MgCO₃, Neben dem CO₂ werden grosse Mengen Serpentine und/oder Olivinite eingesetzt, die im Tagebau abgebaut werden. Diese Mineralien müssen teuer abgebaut und vorbehandelt werden, bevor sie zum Einsatz kommen können.

Ein weiteres Problem baut sich derzeit durch die Zunahme von Meerwasserentsalzungsanlagen auf. Die bisher betriebene Form der Meerwasserentsalzung führt zu einer verstärkten Belastung der Meere mit Salzfrachten, die bei der Gewinnung von Trinkwasser wieder ins Meer zurück fliessen. Zusammen mit der globalen Klimaerwärmung und der Zunahme der Verdunstung, wird sich der Salzgehalt beispielsweise des Persischen Golfs mittelfristig erhöhen und damit den Betrieb der Anlagen zur Meerwasserentsalzung teurer machen. Ausserdem werden die empfindlichen biologischen Lebensräume gestört, wenn sich die Salzkonzentration ändert.

Entsalzungsanlagen mit Anlagen zur Salzproduktion zu kombinieren, um keinerlei Salzkonzentrat in das Meer zurückpumpen zu müssen, wird hier immer mehr als Lösung angesehen. Aber dieser Weg scheint nicht wirtschaftlich zu sein, da der Transportaufwand gross ist, um die so gewonnenen Salze geografisch gesehen an den richtigen Ort zu transportieren.

Ein weiterer Nachteil ist, dass Energie der größte Kostenfaktor bei der Gewinnung von Trinkwasser aus salzigem Meerwasser ist. Koppelt man die Anlage zur Energiegewinnung an ein herkömmliches Kraftwerk, so kann die erforderliche Energie durch das Kraftwerk geliefert werden. Leider entstehen im Kraftwerk aber umweltschädliche Stoffe, wie zum Beispiel CO₂, die mit dem Rauchgas in die Luft gelangen.

Neben dem bereits genannten CO₂ enthalten die Rauchgase von Kraftwerken und anderen Anlagen häufig auch beträchtliche Mengen an Schwefel oder Schwefelverbindungen, Stickstoff oder Stickstoffverbindungen (z.B. NOx), und unter Umständen auch Kohlenwasserstoffe, die zum Beispiel gesundheitsschädigend sein können. Es können auch andere (Schad-)Stoffe in den Rauchgasen vorhanden sein.

Unter den Emissionsquellen nehmen Anlagen zur Strom- und Wärmerzeugung (z.B. Kraftwerke) weltweit die wichtigste Rolle ein. Aus diesem Grunde ist es notwendig, Technologien zur Strom- und Wärmeerzeugung bereit zustellen, die frei oder zumindest weitgehend frei von schädlichen Emissionen sind.

Darüber hinaus müssen die neu zu entwickelnden Technologien heute und zukünftig gültige Anforderungen an die Umweltverträglichkeit, Nachhaltigkeit und Versorgungssicherheit erfüllen. Des Weiteren sollen die Technologien möglichst kostengünstig sein, um Strom- und Wärme im Rahmen der gegebenen Anforderungen möglichst wirtschaftlich bereitzustellen.

Im Folgenden wird das über 100 Jahre alte, so genannte Ammoniak-Soda-Verfahren (Solvay-Verfahren) erläutert, da dieses Verfahren gegenwärtig als nächstliegender Stand der Technik für die vorliegende Erfindung angesehen wird, obwohl die Aufgabenstellung der Erfindung eine andere ist, wie später erläutert wird. Bei dem Solvay-Verfahren geht man aus von den Rohstoffen Natriumchlorid (NaCl) und Kalk (CaCO₃). Als Hilfsstoff wird lediglich Ammoniak (NH₃) benötigt. Das Solvay-Verfahren verläuft über folgende Teilreaktionen (1) bis (4):

| | | | |
|---|---|---|---|
| CaCO₃ | → | CaO+ CO₂ | (1) |
| 2 NaCl + 2 CO₂ + | | | |
| 2 NH₃ + 2 H₂O | → | 2 NaHCO₃ + 2 NH₄Cl | (2) |
| 2 NaHCO₃ | → | Na₂CO₃ + H₂O + CO₂ | (3) |
| CaO + 2 NH₄Cl | → | 2 NH₃ + CaCl₂ + H₂O | (4) |
| CaCO₃ + 2 NaCl | → | CaCl₂ + Na₂CO₃ | (5) |

In Gleichung (5) ist die Gesamtreaktion zusammen gefasst.

Beim Solvay-Verfahren geht es um die industrielle Herstellung von Soda. Es muss das für die Soda verbrauchte Kohlendioxid stets ersetzt werden. Zu diesem Zweck erhitzt man in Öfen Kalkstein (CaCO₃), der sich ab 900°C zu Calciumoxid (CaO) zersetzt. Bei diesem Prozess, der auch als Brennen von Kalk bezeichnet wird (siehe Gleichung (6)), wird CO₂ frei, das wiederum bei der Herstellung von Soda verbraucht wird. Dieser Vorgang braucht sehr viel Energie.

178,44 kJ + CaCO₃ → CaO + CO₂ (6)

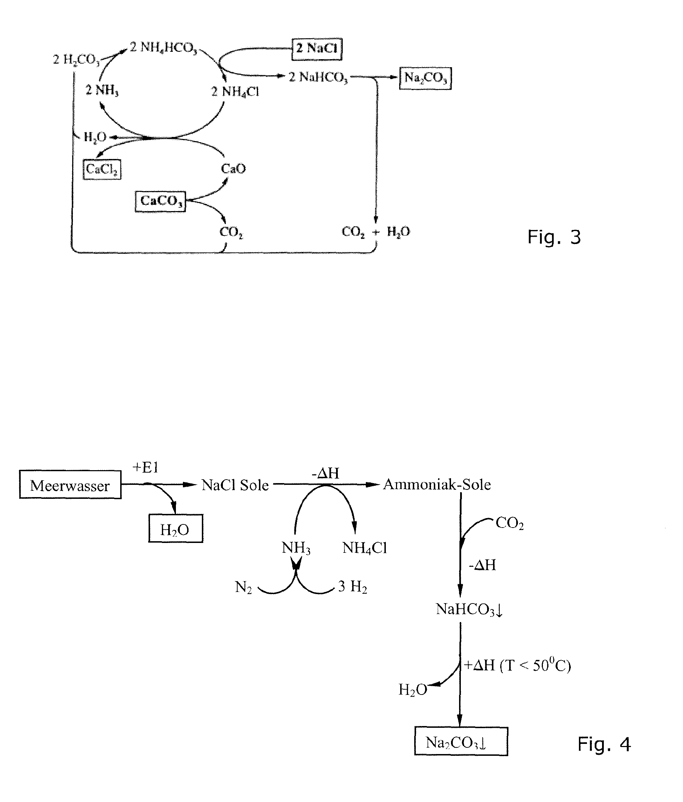

Eine Übersicht des Verfahrensablaufs ist in Fig. 3 dargestellt

Es wird neben der Energiebilanz als ein Nachteil des Solvay-Verfahrens angesehen, dass CO₂ aus Kalk freigesetzt wird, das bisher im Kalk fest gebunden war. Dieses CO₂, auch wenn es dann in Form von Soda (Na₂CO₃) gebunden vorliegt, gelangt z.B. bei der Glasproduktion dann in die Atmosphäre, falls das Soda an die Glasindustrie geliefert wird.

Soda (Na₂CO₃) wird neben der Glasherstellung (mit Siliziumdioxid) auch in vielen anderen Bereichen verwendet und ist ein bedeutender Grundstoff. Für die Herstellung von Waschmitteln, Seifen und Nahrungsmitteln wird es ebenso verwendet wie für die Färberei und Bleicherei. Man findet Soda aber auch bei Farben, in Katalysatoren, Schädlingsbekämpfungs- und Düngemitteln, in Zellulose oder anderen Stoffen und zur Reduktion von Aluminiumoxid und Siliziumdioxid.

Es stellt sich nun die Aufgabe ein Verfahren bereit zu stellen, das in der Lage ist grössere Mengen CO₂ direkt oder indirekt zu binden. Ausserdem soll sich das Verfahren zum Einsatz in grosstechnischen Anlagen, wie zum Beispiel Kraftwerken, eignen.

Vorzugsweise sollen die Verfahren und entsprechenden Vorrichtungen so angelegt werden, dass sie eine breite Akzeptanz finden, indem Stoffe zum Einsatz gelangen, die möglichst rezykliert werden können, oder die in verschiedenen Stufen der Teilprozesse des Verfahrens einsetzbar sind. Dadurch soll eine technische Umsetzung auf breiter Basis ermöglicht werden.

Gemäss Erfindung wird das bei der Nutzung fossiler Brennstoffe freigesetzte CO₂ zurückhalten, respektive gebunden und in einem anderen Medium als der Atmosphäre langfristig gespeichert.

In besonders vorteilhaften Ausführungsformen werden auch die anderen (Schad-)Stoffe, die im Rauchgas enthalten sind gebunden.

In den Zeichnungen sind verschiedene Aspekte der Erfindung schematisch dargestellt, wobei die Zeichnungen zeigen:
- Fig. 1:: ein Schema einer Rauchgasreinigungsanlage gemäss Erfindung;
- Fig. 2:: ein Schema einer konventionellen Meerwasserentsalzungsanlage, die im Zusammenhang mit der vorliegenden Erfindung eingesetzt werden kann;
- Fig. 3:: zeigt schematisch das bekannte Solvay-Verfahren;
- Fig. 4:: zeigt schematisch das erfindungsgemässe Verfahren in einer ersten Ausführungsform (dieses Verfahren wird hier auch als modifiziertes Solvay-Verfahren bezeichnet);
- Fig. 5:: zeigt schematisch eine Teilvorrichtung, die im erfindungsgemässen Verfahren eingesetzt werden kann;
- Fig. 6:: zeigt schematisch eine weitere Teilvorrichtung, die im erfindungsgemässen Verfahren eingesetzt werden kann;
- Fig. 7:: zeigt schematisch zwei weitere Teilvorrichtungen, die im erfindungsgemässen Verfahren eingesetzt werden können;
- Fig. 8:: zeigt in einem schematischen Flussdiagramm Aspekte eines besonders bevorzugten Verfahrens, gemäss Erfindung.

Das erfindungsgemässe Verfahren basiert auf einem neuartigen Konzept, welches unter Verwendung vorhandener Ausgangsstoffe das CO₂ in Natriumhydrogencarbonat (NaHCO₃; wird auch als Natriumbicarbonat bezeichnet) oder in Soda (Na₂CO₃; Natriumcarbonat) bindet.

Im Folgenden werden die einzelnen Ausgangsstoffe und die Produkte besprochen, die gemäss Erfindung zu Einsatz kommen, oder die im Rahmen der entsprechenden Teilprozesse des erfindungsgemässen Verfahrens entstehen können.

### Meerwasser:

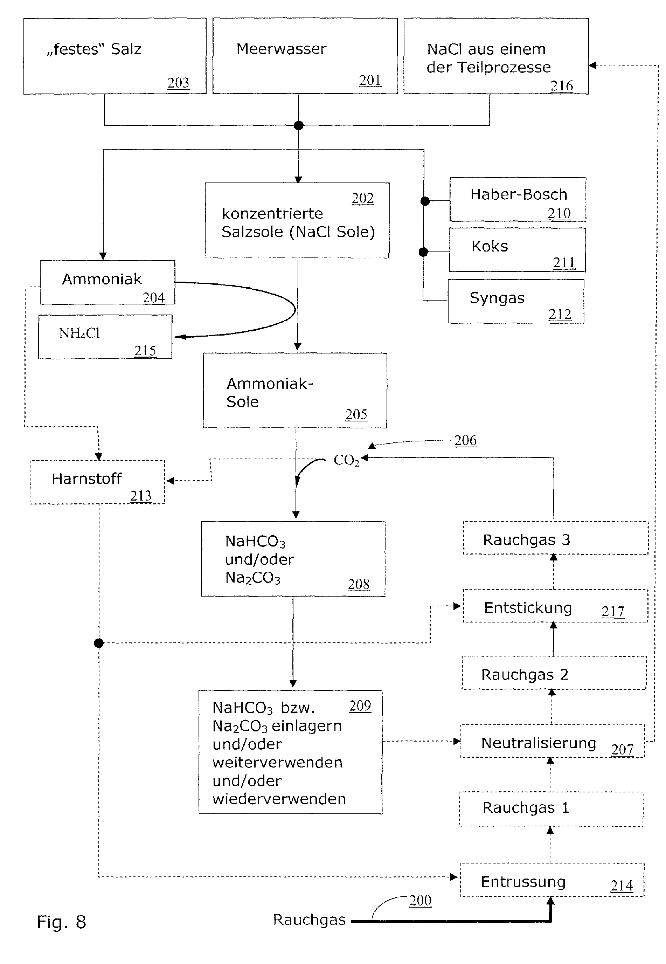

Gemäss Erfindung kommt vorzugsweise Meerwasser (siehe Box 201 in Fig. 8) zum Einsatz, um daraus eine konzentrierte wäßrige Natriumchloridlösung zu erzeugen. Die aus dem Meerwasser erzeugte konzentrierte wäßrige Natriumchloridlösung wird hier vereinfachend als konzentrierte Salzsole bezeichnet (siehe Box 202 in Fig. 8).

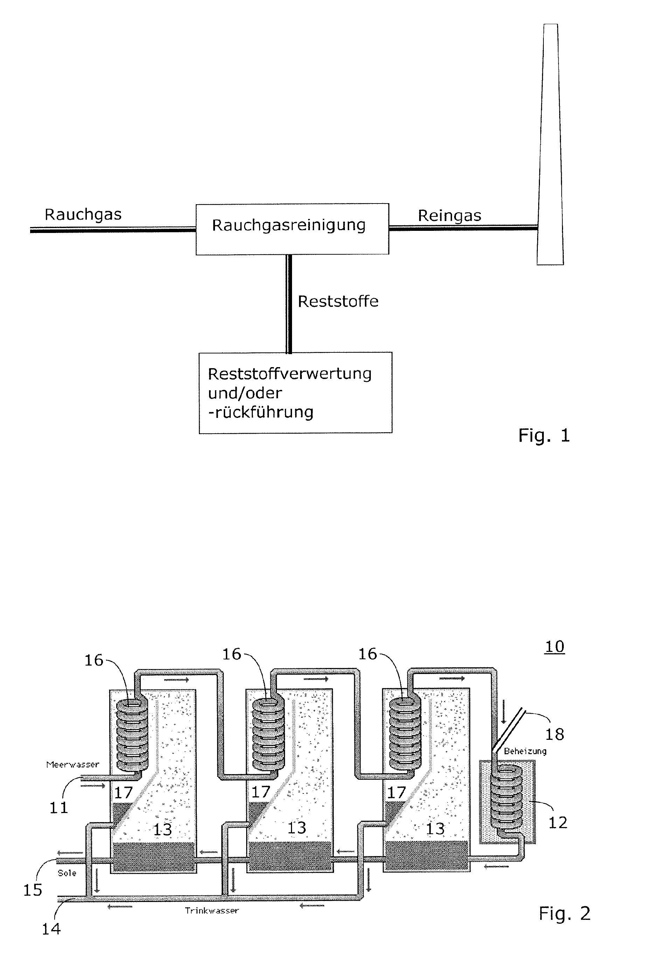

Vorzugsweise wird diese konzentrierte Salzsole (vorzugsweise eine gesättigte oder nahezu gesättigte Sole) durch ein Verdampfungsverfahren (thermisches Destillationsverfahren) erzeugt. Besonders bewährt hat sich die mehrstufige Entspannungsverdampfung. Eine entsprechende Anlage 10 ist in Fig. 2 gezeigt.

Die konzentrierte Salzsole hat vorzugsweise eine Salinität, die grösser ist als 200 g/l, und vorzugsweise grösser ist als 300 g/l. Es ist besonders vorteilhaft den Gesamtsalzgehalt (Salinität) der konzentrierten Salzsole durch eine Leitfähigkeitsmessung zu überwachen. Der Gesamtsalzgehalt kann auch durch Messung des pH-Werts überwacht und der gesamte Prozess dadurch gesteuert werden.

Die mehrstufige Entspannungsverdampfung (MSF - multistage flash evaporation) beruht auf der Verdampfung und nachfolgenden Kondensation des entstandenen Dampfes. Bei diesem Verfahren erhitzt man das Meerwasser, das durch eine Leitung 11 zugeführt wurde, in einem Heizbereich 12. Vorher jedoch läuft das Meerwasser durch mehrere Kühlschleifen 16. Dort wird das Meerwasser eingesetzt, um den Wasserdampf in Niederdrucktanks 13 zu kühlen, damit der Wasserdampf dort auskondensiert. Nach dem Erhitzen im Heizbereich 12 auf Temperaturen über 100°C wird dann das erwärmte Meerwasser in Niederdrucktanks 13 geleitet. Durch den geringen Druck entspannt sich das Wasser und verdampft dort. Dieser Dampf kondensiert danach an der entsprechenden Kühlschleife 16 und man erhält reines Wasser (hier als Süsswasser bezeichnet) in einem Bereich 17. Dieses Wasser kann durch eine Leitung 14 entnommen werden. Die konzentrierte Salzsole (NaCl-Sole) wird durch eine Leitung 15 entnommen.

Sogenannte Multi-Effekt-Destillation (MED - multiple effect distillation) Systeme operieren bei Temperaturen von 63 - 80°C. Dabei wird das Meerwasser wiederholt (8 - 16 mal) über Wärmetauscherröhren versprüht und unter Rückführung der Kondensationswärme verdampft, bis alle flüchtigen Substanzen entwichen sind.

Statt eines thermischen Verfahrens, kann aber auch ein Filterverfahren eingesetzt werden, das zum Beispiel auf einer umgekehrten Osmose beruht. Dabei kommt einfach ausgedrückt eine Membran zum Einsatz, die eine konzentrierte und eine verdünnte Lösung voneinander trennt.

Bevorzugt wird eine Lösung, die ein mehrstufiges Entspannungsverfahren mit einem Filterverfahren kombiniert.

Gemäss Erfindung kann die Energiemenge, die benötig wird, um das mehrstufige Entspannungsverfahren zu betreiben, mindestens teilweise aus einem Kraftwerksprozess bereit gestellt werden.

Ein weiterer Energieanteil kann aus kaskadiert ablaufenden chemischen Teilprozessen, die im Folgenden näher erläutert werden, stammen. Diese chemischen Teilprozesse nutzen die NaCl-Sole, die z.B. aus dem Meerwasser bereit gestellt wurde.

Die erfindungsgemässen Prozesse basieren auf einem ähnlichen Ansatz wie das eingangs beschriebene Solvay-Verfahren. Dieses Solvay-Verfahren ist in Fig. 3 schematisch dargestellt und wurde im einleitenden Teil näher erläutert.

Das grundlegende Schema eines ersten erfindungsgemässen Teilprozesses ist in Fig. 4 gezeigt. Sowohl in Fig. 3 als auch in Fig. 4 sind die Edukte (Ausgangsstoffe) als auch die Produkte mit Umrandung dargestellt, während Zwischenprodukte ohne Umrandung gezeigt sind.

Man geht, wie bereits beschrieben, bei einem ersten erfindungsgemässen Verfahren von Meerwasser aus, das umgewandelt wird in Süsswasser (H₂O) und NaCl-Sole (links oben in Fig. 4 gezeigt; bzw. Box 202 in Fig. 8).

### Salz:

Die im erfindungsgemässen Verfahren zum Einsatz kommende konzentrierte Salzsole kann auch aus "festem" Salz (siehe Box 203 in Fig. 8) und Wasser erzeugt werden. Zu diesem Zweck können Salzvorkommen abgebaut und angeliefert werden. Das Salz kann dann mit Wasser zur konzentrierten Salzsole aufbereitet werden.

Das Salz kann man z.B. aus Salzbergwerken nehmen, die kein sauberes und essbares Salz mehr liefern, oder es kann in der Nähe vom Meer aus dem Meerwasser stammen. In Deutschland gibt es immer noch grosse Salzvorkommen, die eingesetzt werden könnten.

### Einleiten von Ammoniak (NH₃):

Nachdem eine NaCl-Sole erzeugt wurde (siehe Box 202 in Fig. 8), kommt nun Ammoniak (NH₃) zum Einsatz (siehe Box 204 in Fig. 8).

Gemäss Erfindung wird, ausgehend von der NaCl-Sole, in einem nachgeschalteten Verfahren eine ammoniakhaltige Sole (auch Ammoniak-Sole genannt) erzeugt (siehe Box 205 in Fig. 8). Dies geschieht durch das Einleiten von Ammoniak (NH₃) in die konzentrierte Salzsole (NaCl-Sole).

Vorzugsweise wird dieser Vorgang, auch Absorption des Ammoniaks in der Sole genannt, in einer sogenannten Sättigungsapparatur 20 durchgeführt. Dieser Schritt ist exotherm, d.h. es wird Energie frei. In Fig. 4 ist daher neben diesem Schritt ein -ΔH gezeigt.

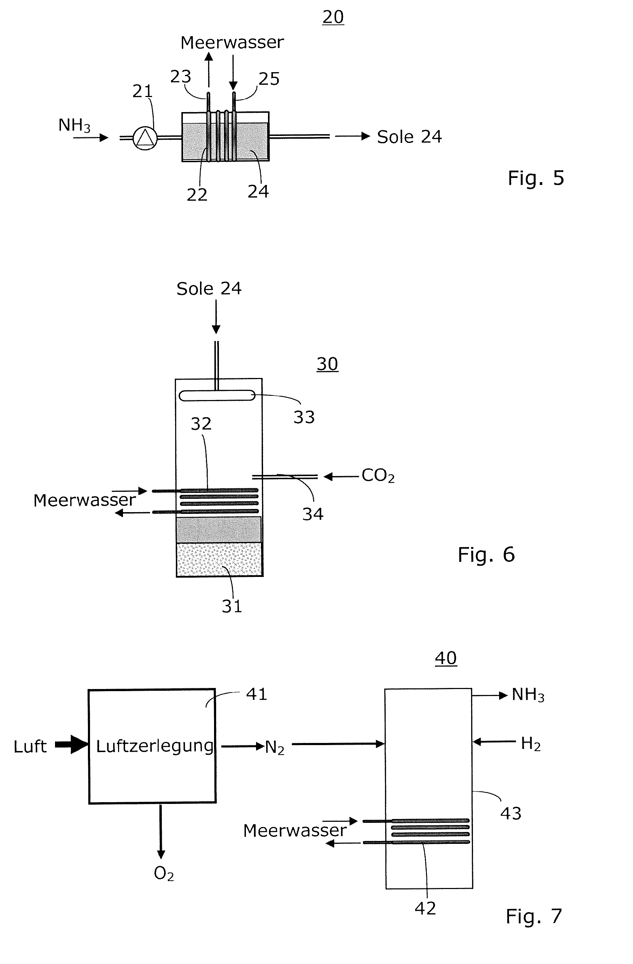

Eine entsprechende Sättigungsapparatur 20 ist stark vereinfacht in Fig. 5 gezeigt. Mittels einer Pumpe 21 (z.B. einer Vakuumpumpe) wird das Ammoniak durch die Sättigungsapparatur 20 gepumpt oder gesaugt und wird entsprechend gekühlt. Vorzugsweise benutzt man hier einen Röhrenkühler 22 mit Rohren, die von kaltem Wasser durchflossen werden.

In einer gegenwärtig bevorzugten Ausführungsform der Erfindung, wird Meerwasser, zum Beispiel direkt nach der Entnahme aus dem Meer, durch diese Rohre des Röhrenkühlers 22 geführt, wie in Fig. 5 angedeutet. Durch diese Massnahme werden zwei Vorteile erzielt: 1. wird das Meerwasser vorgeheizt, was den Energiebedarf für das Bereitstellen der Sole reduziert (falls ein thermisches Destillationsverfahren eingesetzt wird), da das Meerwasser bereits eine erhöhte Temperatur aufweist; 2. erfolgt eine Kühlung der ammoniakhaltigen Sole 24, was es ermöglicht anschliessend deutlich mehr CO₂ in dieser Sole zu lösen. Das Meerwasser hat, nach dem Durchlaufen des Röhrenkühlers 22 auf der Ausgangsseite 23 eine höhere Temperatur als auf der Eingangsseite 25. Es wird also Wärmeenergie an das Meerwasser übergeben. Diese Wärmeenergie ist ein erster Anteil des Energieanteils, der für das thermische Destillationsverfahren zur Bereitstellung der NaCl-Sole benötigt wird (falls man von Meerwasser als Salzlieferant ausgeht).

In der Sättigungsapparatur 20 kondensiert Wasserdampf durch Absorption, wodurch sich die Lösung verdünnt. Deshalb fällt das Natriumchlorid der Sole 24 trotz entsprechender Abnahme der Löslichkeit beim Einleiten des Ammoniaks nicht aus.

Um in einer bevorzugten Ausführungsform den Energiebedarf für das Bereitstellen der Sole zu reduzieren, kann die Ausgangsseite 23 des Röhrenkühlers 22 zum Beispiel direkt mit der Eingangsseite 11 der Vorrichtung 10 verbunden werden. Alternativ kann der Röhrenkühler 22 von einem Wärmetransfermedium durchströmt werden, das Wärme durch Röhren zu der Beheizung 12 transportiert, um hier das Erhitzen des Meerwassers zu unterstützen. In diesem Fall wird der Röhrenkühler 22 nicht vom Meerwasser durchströmt.

Nun wird CO₂ in die ammoniakhaltige Sole 24 eingebracht. Es kann aber CO₂ zusammen mit Ammoniak in die salzhaltige Sole eingeleitet werden. Dieser Vorgang ist in Fig. 8 mit dem Bezugzeichen 206 gekennzeichnet. Dies kann geschehen, indem die ammoniakhaltige Sole 24 von oben in eine Vorrichtung 30 (z.B. in Form eines Füllturms) geleitet wird, während gleichzeitig von unten CO₂ hineingepumpt wird (siehe Fig. 6). Vorzugsweise wird die ammoniakhaltige Sole 24 durch einen Verteilkopf 33 oder durch Einspritzdüsen in die Vorrichtung 30 eingebracht.

Auch dieser Prozess ist exotherm und unter Wärmeentwicklung fällt das Natriumhydrogencarbonat (NaHCO₃) 31 aus. In Fig. 6 ist das Natriumhydrogencarbonat (NaHCO₃) 31 stark schematisiert im unteren Bereich der Vorrichtung 30 gezeigt.

Das Natriumhydrogencarbonat (NaHCO₃) 31 kann vorzugsweise in einem weiteren Teilprozess eingesetzt werden, um Bestandteile des Rauchgases zu neutralisieren, wie weiter unten beschrieben wird (siehe Box 207 in Fig. 8).

Da die Löslichkeit von CO₂ in der ammoniakhaltigen Sole 24 mit steigender Temperatur abnimmt, sollten Kühleinrichtungen 32 eingesetzt werden, um die bei der exothermen Reaktion entstehende Wärme abzuführen.

Auch diese Kühleinrichtung 32 kann wiederum mit Meerwasser gekühlt werden, wie in Fig. 6 angedeutet. Damit wird das Meerwasser (weiter) vorgeheizt, bevor es in der Beheizung 12 endgültig auf eine Temperatur über 100°C gebracht wird. Alternativ kann die Kühleinrichtung 32 von einem Wärmetransfermedium durchströmt werden, das Wärme durch Röhren zu der Beheizung 12 transportiert, um hier das Erhitzen des Meerwassers zu unterstützen. In diesem Fall wird die Kühleinrichtung 32 nicht vom Meerwasser durchströmt.

Vorzugsweise werden die Kühleinrichtungen 22 und 32 in Reihe geschaltet und nacheinander von Meerwasser durchströmt, bevor dann das erwärmte Meerwasser über die Eingangsseite 11 in die Vorrichtung 10 gelangt.
Falls das Meerwasser durch die Abwärme der exothermen Prozessschritte vorgewärmt wird, nimmt die Kühlleistung der Kühlschleifen 16 ab. Diese Kühlschleifen 16 arbeiten am besten bei Meerwassertemperaturen, die unter 50°C und vorzugsweise unter 30°C liegen. Daher kann in einer alternativen Ausführungsform das durch die Abwärme vorgewärmte Wasser direkt über eine Bypass-Leitung 18 in die Heizung 12 geleitet werden, während kühleres Meerwasser durch die Kühlschleifen 16 geführt wird. Die Bypass-Leitung 18 ist in Fig. 2 ansatzweise angedeutet. Das kühlere Meerwasser wird bei dieser Ausführungsform mit dem vorgewärmten Meerwasser gemischt und dann auf über 100°C gebracht, bevor es dann in die Niederdrucktanks 13 gelangt.

### Natriumhydrogencarbonat (NaHCO₃):

In dem beschriebenen Teilprozess (siehe Fig. 4), der auch als modifiziertes Solvay-Verfahrten bezeichnet wird, kann z.B. Natriumhydrogencarbonat (NaHCO₃) entstehen (siehe Box 208 in Fig. 8).

Das Natriumhydrogencarbonat (NaHCO₃) kann gelagert werden, um das CO₂ dauerhaft zu binden. Natriumhydrogencarbonat kann aber auch in nachgeschalteten chemischen (industriellen) Prozessen eingesetzt werden, bei denen möglichst kein CO₂ entsteht (siehe Box 209 in Fig. 8).

Das Natriumhydrogencarbonat (NaHCO₃) kann auch in einem weiteren Teilprozess zur Neutralisierung der Rauchgase eingesetzt werden, wie weiter unten beschrieben (siehe Box 207 in Fig. 8).

Die Rauchgase (siehe Rauchgaszufuhr 200 in Fig. 8) des Kraftwerks werden in eine hochkonzentrierte Salzsole eingeleitet, nachdem diese Salzsole vorher mit NH₃ zu einer Ammoniaksole (siehe Box 205 in Fig. 8) umgesetzt wurde. Auf diesem Weg kann Natriumhydrogencarbonat (NaHCO₃) entstehen, das eventuell verschmutzt ist, weil sich im Rauchgas noch andere Gase und Stoffe befinden können (je nachdem mit welchen anderen Teilprozessen dieser Reinigungsprozess durchgeführt wird). Das Natriumhydrogencarbonat (NaHCO₃) kann man dann z.B. in Salzstollen einlagern und hat so sicher gestellt, dass das gebundene CO₂ dauerhaft im Natriumhydrogencarbonat (NaHCO₃) verbleibt.

Dieser aufgezeigte Weg ist besser und weniger riskant, als das Einpumpen von gasförmigem CO₂ Gas in kalkhaltige Gesteinsschichten.

### Natriumcarbonat (Na₂CO₃/ Soda):

Das Natriumhydrogencarbonat (NaHCO₃) kann durch langsames Erwärmen getrocknet und damit als Pulver (calziniertes Soda = wasserfreies Natriumcarbonat: Na₂CO₃) bereitgestellt werden (siehe Box 208 in Fig. 8). Dieser Vorgang ist in Fig. 4 schematisch angedeutet. Vorzugsweise wird das beim Erwärmen entstehende Süsswasser aufgefangen. Das Erwärmen geschieht vorzugsweise bei einer Temperatur T<=50°C, um die Freisetzung von CO₂ ganz zu verhindern, oder um die freigesetzte CO₂ Menge zu reduzieren.

Das Natriumcarbonat kann gelagert werden, um das CO₂ dauerhaft zu binden. Natriumcarbonat kann aber auch in chemischen Prozessen eingesetzt werden, bei denen möglichst kein CO₂ entsteht (siehe Box 209 in Fig. 8).

Besonders bevorzugt ist ein Ansatz, bei dem Natriumcarbonat in einem Teilprozess zur Neutralisierung der Rauchgase eingesetzt wird, wie weiter unten beschrieben (siehe Box 207 in Fig. 8).

Die Rauchgase (siehe Rauchgaszufuhr 200 in Fig. 8) des Kraftwerks werden in eine hochkonzentrierte Salzsole eingeleitet, nachdem diese Salzsole vorher mit NH₃ zu einer Ammoniaksole (siehe Box 205 in Fig. 8) umgesetzt wurde. Auf diesem Weg entsteht Soda, das verschmutzt ist, weil sich im Rauchgas noch andere Gase und Stoffe befinden können (je nachdem mit welchen anderen Teilprozessen dieser Reinigungsprozess durchgeführt wird). Das Soda kann man dann z.B. in Salzstollen einlagern und hat so sicher gestellt, dass das gebundene CO₂ dauerhaft im Soda verbleibt.

Dieser aufgezeigte Weg ist besser und weniger riskant, als das Einpumpen von CO₂ Gas in kalkhaltige Gesteinsschichten.

Gemäss Erfindung kommt Ammoniak (NH₃) zum Einsatz, wie erwähnt. Es gibt verschiedene Wege, um das Ammoniak bereit zu stellen. Besonders bevorzugt sind die Ansätze, die im Folgenden beschrieben werden. In Fig. 8 sind drei verschiedene Ansätze zum Bereitstellen oder Herstellen von Ammoniak mit den Bezugszeichen 210, 211 und 212 gekennzeichnet.

### Gewinnung von Ammoniak NH₃ nach dem Haber-Bosch-Verfahren:

Ammoniak kann durch direkte Vereinigung von Stickstoff und Wasserstoff nach Gleichung (7) hergestellt werden:

N₂ + 3 H₂ ≒ 2 NH₃ + 92 kJ (7)

Dieser Ansatz ist in Fig. 4 schematisch angedeutet. In Fig. 8 ist dieser Weg mit dem Bezugszeichen 210 gekennzeichnet. Die Ammoniaksynthese nach Gleichung (7) ist exotherm (Reaktionsenthalpie - 92.28 kJ/mol). Es handelt sich um eine Gleichgewichtsreaktion, die unter Volumenverminderung verläuft. Der Stickstoff kann zu Beispiel nach dem Linde-Verfahren bereit gestellt werden, bei dem aus der Umgebungsluft einerseits der Sauerstoff und andererseits der Stickstoff abgetrennt wird, wie in Fig. 7 schematisch durch den Verfahrensblock 41 dargestellt. Der Verfahrensblock 41 kann Teil einer Anlage 40 sein, die zum Bereitstellen des Ammoniaks (NH₃) ausgelegt ist.

Der Wasserstoff kann zum Beispiel auf konventionellem Wege aus Methan (CH₄) erzeugt werden. Dieses Methan kann aus einem Pyrolyseverfahren erzeugt werden, oder das Methan kann aus Ammoniumchlorid (NH₄Cl) erzeugt werden. Dieses NH₄Cl entsteht in dem erfindungsgemässen Verfahren als (Zwischen)Produkt, wie in Fig. 4 angedeutet (NH₄Cl ist eine weiteres Solvayausgangsprodukt). Man kann aber auch NH₄Cl einsetzen, um weiteres CO₂ zu binden.

Der Wasserstoff kann aber auch aus Synthesegas gewonnen werden, wie weiter unten beschrieben.

Da die NH₃-Synthese nach (7) exotherm ist und unter Volumenverminderung abläuft, besteht eine Abhängigkeit der Ausbeute an NH₃ von Druck und Temperatur. Die exotherme Reaktion (7) verschiebt sich mit steigender Temperatur auf die Seite der Ausgangsprodukte, d. h. bei hoher Temperatur ist die Ausbeute an NH₃ geringer. Reaktionen mit Volumenabnahme verlagern sich bei Drucksteigerung auf die Seite der Endprodukte, d. h. hier zu höheren Ausbeuten an NH₃. Daher wird gemäss Erfindung vorzugsweise die NH₃-Synthese in einem NH₃-Synthese-Reaktor, z.B. in Form eines gekühlten Druckgefässes 43, durchgeführt. Besonders bevorzugt ist im vorliegenden Zusammenhang wiederum eine Kühlung mittels Meerwasser. Es kann auch hier eine Kühleinrichtung 42 eingesetzt werden, die wiederum Teil einer Reihenschaltung von meerwassergekühlten Kühleinrichtungen 22, 32 und 42 ist.

Die NH₃-Synthese nach (7) stellt einen Teil der Energie zur Verfügung, die für das Betreiben des thermische Destillationsverfahrens zur Bereitstellung der NaCl-Sole benötigt wird, falls man von Meerwasser als Salzlieferant ausgeht.

Alternativ kann auch hier eine Kühlung mit einem Wärmetransfermedium vorgenommen werden, wie weiter oben beschrieben, um die Energie zu der Heizung 12 zu fördern.

Falls gewünscht, kann bei Bedarf aus dem Ammoniak (NH₃) auch Harnstoff nach folgender Gleichung (8) hergestellt werden. In Fig. 8 ist dieser Teilprozess durch das Bezugszeichen 213 gekennzeichnet.

2 NH₃ + CO₂ → (NH₂)2CO + H₂O (8)

Dieser Teilprozess (8) kann eingesetzt werden, falls man zum Beispiel in dem parallel ablaufenden Kraftwerks- oder Pyrolyseprozess Harnstoff braucht, um Russpartikel oder andere Schadstoffe aus den Abgasen (Rauchgas) zu entfernen. Die Entrussung mittels Harnstoff ist in Fig. 8 durch das Bezugszeichen 214 gekennzeichnet.

Der Harnstoff kann aber auch als Energiespeicher eingesetzt werden, da sich Harnstoff gut und problemlos speichern und/oder transportieren lässt.

### Gewinnung von Ammoniak NH₃ aus Koks oder Synthesegas:

Bei der Herstellung von Koks (ziemlich reiner Kohlenstoff) aus Kohle entsteht bekanntermassen ein brennbares Gasgemisch (H₂, CO, CO₂, CH₄, N₂, etc.), das früher als "Stadtgas" verwendet wurde. Aus Koks und Wasserdampf lässt sich "Wassergas" (wird auch als Synthesegas oder Syngas bezeichnet) herstellen. Das Synthesegas umfasst Wasserstoff, Kohlenmonoxid und eventuell auch andere Gasbestandteile. Der Wasserstoff des Synthesegases kann für die AmmoniakSynthese (NH₃) eingesetzt werden (siehe Box 212 in Fig. 8). Das Ammoniak, das auf diesem Weg vor Ort, d.h. am oder beim Kraftwerk, hergestellt wurde, kann in dem modifizierten Solvay-Verfahren (siehe Fig. 4) zum Einsatz kommen und muss nicht von extern angeliefert werden.

### Ammoniumchlorid:

Ammoniumchlorid (NH₄Cl) entsteht in dem erfindungsgemässen Verfahren als (Zwischen)Produkt, wie in Fig. 4 angedeutet (siehe Box 215 in Fig. 8).

Ammoniumchlorid sublimiert beim Erhitzen und zerfällt ab 335°C vollständig in Ammoniak (NH₃) und Chlorwasserstoff (HCl), wie in Gleichung (9) gezeigt:

H₂O + 2 NH₄Cl → 2 NH₃ + HCl (9)

Dieser Prozess (9) kann genutzt werden, um Ammoniak (NH₃) (zurück) zu gewinnen. Chlorwasserstoff (HCl) ist ein wertvoller Rohstoff für viele industrielle Prozesse. Falls Natrium (Na) zur Hand ist, könnte optional wieder NaCl hergestellt werden. Das NaCl kann wiederum zum Bereitstellen der Salzsole eingesetzt werden.

Aus Ammoniumchlorid kann aber auch über folgenden optionalen Weg (10) Ammoniak (NH₃) (zurück) gewonnen werden. Auch bei diesem Prozess gewinnt man wieder NaCl:

NH₄Cl + NaOH → NH₃ + NaCl + H₂O (10)

Verwendung findet Ammoniumchlorid heute unter anderem bei der Herstellung von Kältemischungen, in Färbereien und Gerbereien. Ebenfalls findet es Anwendung beim Verzinnen, Verzinken oder Löten, da es die Fähigkeit besitzt, mit Metalloxiden flüchtige Chloride zu bilden und somit die Metalloberfläche zu reinigen.

Aus dem Ammoniumchlorid kann aber auch Ammoniumsulfid (NH₄HSO₄) erzeugt werden, wie zum Beispiel in MXNL03000042 beschrieben.

Das Ammoniumchlorid kann aber auch als Wasserstoffspeicher eingesetzt werden.

Aus dem Ammoniumchlorid kann man Wasserstoff abspalten und diesen Wasserstoff nach folgender Reaktionsgleichung (11) mit CO₂ zu Methan und Wasser umwandeln. Das Verfahren (11) läuft bei ca. 1250°C ab und ist exotherm (setzt Energie frei). Die entsprechende Energiemenge, die bei (11) frei wird, kann als Energiebeitrag im Verfahren zur Herstellung der NaCl-Sole eingesetzt werden.

CO₂ + 3 H₂ → CH₄ + H₂O (11)

Dieses Verfahren (11) ist gegenwärtig besonders bevorzugt, da einerseits auch bei diesem Verfahren CO₂ gebunden wird und andererseits Methan zur Verfügung gestellt werden kann. Das Methan ist ein wertvoller Energieträger, der gelagert und transportiert werden kann. Besonders vorteilhaft ist es, wenn im Rahmen der Erfindung das Methan dazu eingesetzt wird, um mindestens einen Teil der Energiemenge bereit zu stellen, die für das Herstellen der NaCl-Sole benötigt wird.

Das Methan kann aber auch zu längerkettigen Kohlenwasserstoffen umgesetzt oder verflüssigt werden.

Dass heisst, es ist möglich das Ammoniumchlorid als (Zwischen)Produkt für weitere wichtige Prozesse bereit zu stellen, oder das Ammoniumchlorid in entsprechende Produkte umzuwandeln.

### Natriumhydrogencarbonat oder Natriumcarbonat zur Neutralisation saurer Komponenten

Als ein Teilprozess kann, analog zum Neutrec© Verfahren oder Natriumhydrogencarbonat-("Bikarbonat"-)Verfahren, Natriumbicarbonat eingesetzt werden, um die sauren Bestandteile des Rauchgases (Salzsäure, Schwefeldioxid, Flusssäure usw.) zu neutralisieren (siehe Box 207 in Fig. 8). Durch Hinzufügung von Aktivkohle bzw. Herdofenkoks, können zusätzlich auch Schwermetalle sowie Dioxine und Furane abgeschieden werden. Die bei der Neutralisation der sauren Rauchgasbestandteile entstehenden Natriumverbindungen (Natriumchlorid, Natriumsulfat, Natriumfluorid, Natriumcarbonat usw.) werden durch Filtertechniken von den Rauchgasen getrennt.

Die Neutralisation der sauren Komponenten durch das Natriumhydrogencarbonat kann durch die folgenden Reaktionsgleichungen beschrieben werden:

NaHCO₃ + HCl → NaCl + H₂O + CO₂ (12)

2 NaHCO₃ + SO₂ + 1/2 O₂ → Na₂SO₄ + H₂O + 2 CO₂ (13)

NaHCO₃ + HF → NaF + H₂O + 2 CO₂ (14)

Bei diesen drei Reaktionen entstehen neben den Natriumverbindungen CO₂. Damit dieser CO₂-Anteil aus den Rauchgasen entfernt werden kann, bietet es sich an die beschriebene Neutralisation mittels Natriumhydrogencarbonat vor dem eigentlichen modifizierten Solvay-Verfahren durchzuführen. In Fig. 8 ist dementsprechend ein Ansatz gezeigt, bei dem die Neutralisierung (Box 207) geschieht, bevor das CO₂ in die Ammoniaksole (Box 205) geleitet wird.

Bei der beschriebenen Neutralisation mit Natriumhydrogencarbonat wird das Natriumhydrogencarbonat mit den heißen Rauchgasen in Kontakt gebracht. Dadurch wird es thermisch aktiviert und zu Natriumcarbonat (Soda) mit großer spezifischer Oberfläche und Porosität umgewandelt, wie durch folgende Gleichung (15) angedeutet:

2 NaHCO₃ → Na₂CO₃ + H₂O + CO₂ (15)

Gemäss Erfindung kann das Neutralisationsverfahren noch besser und ökologischer gestaltet werden, indem Natriumhydrogencarbonat durch Natriumcarbonat (Soda) ersetzt wird. Dieses Soda fällt gemäss Erfindung als Produkt des modifizierten Solvay-Verfahrens an und kann zum Teil in der selben Anlage zur Neutralisation der sauren Komponenten des Rauchgases eingesetzt werden.

Wenn Natriumcarbonat eingesetzt wird, dann entfällt die gesamte Logistik, die im Zusammenhang mit den NEUTREC© Verfahren zum Bereitstellen und Mahlen des Natriumhydrogencarbonats erforderlich ist. Es wird daher in einem besonders vorteilhaften Verfahren direkt Natriumcarbonat eingesetzt, dass auch als "aktiviertes Carbonat" bezeichnet wird. Durch den Einsatz des "aktivierten Carbonats" ergibt sich eine deutlich höhere Effizienz bei der Neutralisation der sauren Bestandteile.

### Kühlvorrichtungen:

Im vorliegenden Zusammenhang ist verschiedentlich von Kühlvorrichtungen die Rede. Es liegt auf der Hand, dass es verschiedene Wege gibt, um solche Kühlvorrichtungen zu realisieren.

### Süsswasser:

Ein weiterer wesentlicher Aspekt der Erfindung wird darin gesehen, dass beim Binden von CO₂, das aus einem Verbrennungs-, Pyrolyse- oder anderem industriellen Prozess stammt, neben dem wertvollen Soda auch Trinkwasser/Süsswasser entsteht. Diese Wasser ist quasi ein Abfallprodukt und kann z.B. für die Trinkwasserversorgung oder die Bewässerung eingesetzt werden.

### Weitere Aspekte der Erfindung:

Das erfindungsgemässe Verfahren zur Rauchgasreinigung, insbesondere zur Rauchgasreinigung und zum Binden von gasförmigem CO₂, umfasst zusammenfassend die folgenden Schritte:
1. Erzeugen einer konzentrierte Salzsole mit erhöhter Salzkonzentration (Box 202),
2. Bereitstellen von Ammoniak (NH₃) (Box 204),
3. Bereitstellen von Rauchgas, das unter anderem CO₂ aus einem Oxidations -oder Reduktionsprozess enthält,
4. in die konzentrierte Salzsole Einleiten des Ammoniaks (NH3), um eine ammoniakhaltige Sole zu erhalten (Box 205), und Einleiten des CO₂ (Bezugszeichen 206),
5. Abtrennen von Natriumhydrogencarbonat (NaHCO₃) und/oder Natriumcarbonat (Na₂HCO₃) aus der ammoniakhaltigen Sole,
6. Verwenden des Natriumhydrogencarbonat (NaHCO₃) und/oder Natriumcarbonat (Na₂HCO₃), um einen Teilprozess zur Neutralisierung des Rauchgases (Box 207) damit zu speisen.

Vorzugsweise wird der Teilprozess gemäss Schritt 6 vor dem Teilprozess nach Schritt 4 durchgeführt.

Das hier beschriebenen Verfahren sind besonders ökologisch, da zum einen Rauchgase effizient gereinigt und zum anderen anfallende Reststoffe ohne Belastung von Wasser und Boden wiederverwertet werden.

Es wird eine Gesamtlösung für die Reinigung von Rauchgasen bereitgestellt. Das entsprechende Verfahren besteht aus mehreren Teilprozessen.

In einem nachgeschalteten Teilprozess kann Natriumsalz (z.B. NaCl) aus den Reststoffen der Rauchgasreinigung (z.B. aus den Natriumprodukten, die bei der Neutralisierung, Box 207, anfallen) gewonnen werden. Dieses Natriumsalz kann gemäss Erfindung in dem modifizierten Solvay-Verfahren eingesetzt werden (siehe Box 216 in Fig. 8). Durch das so gewonnene Natriumsalz kann also die Salzzufuhr aus Meerwasser (Box 201) oder das Erzeugen von Salzsole aus festen Salzen (Box 203) ergänzt oder gar komplett ersetzt werden. In diesem Zusammenhang muss kein grosser Aufwand bei der Herstellung und Reinigung der Salzsole betrieben werden. Es können also die üblichen Filterpressen und Aktivkohlefilter entfallen. Selbst mit verunreinigter Salzsole kann das modifizierte Solvay-Verfahren effizient und sicher betrieben werden.

In einem weiteren Teilschritt können gemäss Erfindung auch die Stickoxide im Rauchgas (als NOx bezeichnet), beseitigt werden (Box 217). Um dies zu ermöglichen, kann zum Beispiel das NOx in den Rauchgasen durch ein Katalysatorsystem (z.B. ein SCR; selektive katalytische Reduktion) gereinigt werden. Vorzugsweise wird in einem solchen System zur Beseitigung oder Reduzierung der Stickoxide Harnstoff als Reduktionsmittel eingesetzt. Die SCR Technologie kann besonders vorteilhaft als einer der letzten Teilprozesse zur Rauchgasbehandlung eingesetzt werden, da es auch in der Lage ist Ammoniak-Rückstände im Rauchgas zu beseitigen. Das kann wichtig sein, falls das Rauchgas an sich Ammoniak enthält, wie das z.B. bei den Rauchgasen eines Zementwerks der Fall sein kann, oder das kann wichtig sein, falls in anderen Teilprozessen Ammoniak zum Einsatz kommt.

In einer weiteren Ausführungsform der Erfindung kommt die SCR Technologie daher nach dem modifizierten Solvay-Verfahren zum Einsatz, um etwaige Ammoniak-Rückstände beseitigen zu können.

Die Beseitigung von Stickoxiden kann aber auch durch die Eindüsung von Ammoniak im Feuerungsraum (z.B. im Kessel eines Kraftwerks) nach dem Verfahren der Nicht-Katalytischen Entstickung (SNCR-Verfahren) erfolgen.

Der beim SCR Verfahren neben Wasserdampf entstehende Stickstoff kann z.B. im Haber-Bosch-Verfahren eingesetzt werden.

Der apparatetechnische Aufwand ist gemäss Erfindung besonders niedrig, da in allen Teilverfahren ähnliche oder artverwandte Stoffe eingesetzt werden. Bei einer geeigneten, kaskadenartigen Kopplung der Teilprozesse können sogar Produkte des einen Teilprozesses in anderen Teilprozessen eingesetzt werden, wie beschrieben.

Salz und Kohle sind übrigens die wichtigsten Rohstoffe, die Deutschland besitzt. Das Salz kann eingesetzt werden, um Salzsole bereitzustellen und aus der Kohle kann z.B. Synthesgas und aus dem Synthesegas kann Ammoniak erzeugt werden. Damit stehen in Deutschland, aber auch in vielen anderen Ländern, alle wichtigen Rohstoffe vor Ort zur Verfügung.

## Patentansprüche

**1.** Verfahren zum Behandeln von Rauchgas, das gasförmiges CO₂ umfasst, **gekennzeichnet durch** die folgenden Schritte:
a. Bereitstellen einer konzentrierte Salzsole mit erhöhter Salzkonzentration,
b. Bereitstellen von Ammoniak (NH₃),
c. Bereitstellen des Rauchgases,
d. Einleiten des Ammoniaks (NH₃) in die konzentrierte Salzsole, um eine ammoniakhaltige Sole zu erhalten,
e. Einleiten des Rauchgases in die konzentrierte Salzsole und/oder in die ammoniakhaltige Sole,
f. Abtrennen von Natriumhydrogencarbonat (NaHCO₃) und/oder Natriumcarbonat (Na₂CO₃) aus der ammoniakhaltigen Sole,
g. Verwenden des Natriumhydrogencarbonats (NaHCO₃) und/oder Natriumcarbonats (Na₂HCO₃) zur Neutralisation saurer Komponenten des Rauchgases.

**2.** Verfahren nach Anspruch 1, wobei in Schritt f) pulverförmiges Natriumcarbonat (Na₂CO₃) bereitgestellt wird um das pulverförmige Natriumcarbonat (Na₂CO₃) in Schritt g) einsetzen zu können.

**3.** Verfahren nach Anspruch 1 oder 2, wobei der Schritt g) vor dem Schritt f) ausgeführt wird.

**5.** Verfahren nach Anspruch 1 oder 2, wobei im Schritt g) ein Natriumsalz (NaCl) entsteht und wobei dieses Natriumsalz (NaCl) beim Bereitstellen der konzentrierte Salzsole nach Schritt a) zum Einsatz kommt.

**6.** Verfahren nach Anspruch 1, wobei im Schritt d) mindestens ein Teil des Ammoniaks (NH₃) in die konzentrierte Salzsole eingeleitet wird, bevor das Rauchgas in die konzentrierte Salzsole eingeleitet wird, um so eine Umsetzung zu Salzsäure zu vermeiden.

**7.** Verfahren nach Anspruch 1 oder 2, wobei das Bereitstellen von Ammoniak (NH₃) geschieht, indem
- Ammoniak (NH₃) durch ein Haber-Bosch-Verfahren, oder
- aus Synthesegas,
- oder aus Ammoniumchlorid (NH₄Cl) erzeugt wird.

**8.** Verfahren nach einem der vorhergehenden Ansprüche 1 bis 7, wobei in einem weiteren Schritt Harnstoff eingesetzt wird, um das Rauchgas zu reinigen.

**9.** Verfahren nach Anspruch 8, wobei der Harnstoff aus Ammoniak (NH₃) erzeugt wird.

**10.** Verfahren nach einem der vorhergehenden Ansprüche 1 bis 9, wobei in einem weiteren Schritt ein Entstickungsprozess ausgeführt wird, um Stickoxide aus dem Rauchgas zu entfernen.

**11.** Verfahren nach Anspruch 20, wobei der Harnstoff als Reduktionsmittel eingesetzt wird.

**12.** Verfahren nach einem der vorhergehenden Ansprüche 1 bis 11, wobei das Rauchgas aus den Abgasen eines Kraftwerksprozesses und/oder Pyrolyseprozesses stammt.
